# EUROPEAN PATENT APPLICATION

(11) **EP 1 102 416 A2**
(43) Date of publication of application: **23.05.2001**
(21) Application number: 00125151.1
(22) Date of filing: 17.11.2000
(51) Int. Cl.: H04B 7/005

(54) **Mobile station with closed loop transmission power control system and method**

(30) Priority: 19.11.1999 JP 33042599
(71) Applicant: NEC CORPORATION, Tokyo (JP)
(72) Inventor: Saito, Atshushi, c/o NEC Saitama Ltd., Kamikawamachi, Kodama-gun, Saitama (JP)
(74) Representative: Betten & Resch

(57) **Abstract**

The mobile station (10) comprises a step size decider 60 that is for deciding a proper step size of power control level in correspondence with the power fluctuation of the reception signal, and can decide a step size of power control level of itself. The mobile station is used for closed loop power control of reverse link CDMA communication. The closed loop power control uses transmission power control bits. Each transmission power control bit is transmitted from the base station toward the mobile station to designate either an increase or a decrease of the transmission power of the mobile station. When being supplied from the base station with a reception signal subjected to the power fluctuation, the mobile station uses the step size decided in itself to transmit toward the base station an output signal that is subjected to power control.

## Description

### Background of the Invention:

This invention relates to a mobile station with a transmission power control system. The transmission power controls processes are categorized into a closed loop power control process and an open loop power control process. In particular, this invention relates to the transmission power control system which is used for the closed loop power control process.

In the field of cellular telecommunications, recent techniques have been directed to Code Division Multiple Access (CDMA) system. In a CDMA system, a base station provides a cell-site (or a short cell-site) and communicates with multiple mobile stations of users existing on the cell-site, wherein the communication from each mobile station to base station is called uplink or reverse link communication, while the communication from base station to each mobile station is called downlink or forward link communication. In cither the uplink and downlink communications, each mobile station uses a channel identified by a uniquely assigned digital code. Therefore, the reverse link and the forward link communications can be simultaneously carried out while each of the links shares the respective wideband frequency spectrum.

In a CDMA cellular system, transmission power levels of the mobile stations, especially in reverse link communication, become important. In reverse link communication, a base station simultaneously receives the signals from many different mobile stations at the same frequency. The CDMA demodulation processes taken into account, it is necessary that the signal received at the base station from each mobile station be as close as possible to single level. Conversely, the signal from one mobile station overwhelms the signal from another mobile station. This problem is well known as near-far problem.

To resolve the near-far problem, transmission power control of each mobile station is carried out in a CDMA cellular system so that the signal level received at the base station from each mobile station is as close as possible to a single predetermined level. Such transmission power controls are specified in the Telecommunications Industry Association/ Electronic Industries Association (TIA/EIA) IS-95A and IS-95B standards. Also, the transmission power controls are discussed in U.S. Pat. No. 5,056,109, U.S. Pat. No. 5,940,743, and Japanese Unexamined Patent Publication (JP-A) No. Hci 6-13956.

Specifically, in IS-95A power control process, the base station transmits transmission power control bits for mobile stations in forward link communication. Each transmission power control bit indicates either "increase" or "decrease" of the transmission power. A single transmission power control bit is transmitted every 1.25ms. A step size of the power control is 1dB in IS-95A. When a transmission power control bit has a value "1", the mobile station increases its transmission power 1dB. On the contrary, the mobile station decreases its transmission power 1 dB when a transmission power control bit has a value "0".

IS-95B standard has three step sizes of the power control, namely 1dB, 0.5dB, and 0.25dB. In compliance with IS-95B, the base station must select a proper one of the step sizes for each mobile station and transmit an indication of the proper step size together with the transmission power control bit.

However, the IS-95B power control process does not follows a sharp fluctuation of a radio frequency quality in a hard fading condition. This is because the number of the step sizes is three and is too short to follow the sharp fluctuation. Obviously, the IS-95A power control process does not follow, too.

In addition, the IS-95B standard requires the base station to install therein the function for deciding the proper step size of the power control for each mobile station. In addition, soft hand-off function is installed in the base station. Hence, the deciding function of the proper step size of the power control become complex in algorithm so that hardware of the base station become large in size.

### Summary of the Invention:

This invention therefore provides a mobile station which is very sensitive to sharp fluctuation of a radio frequency quality and can follow it, even if in a hard fading condition, without complicated algorithm

According to one aspect of this invention, a mobile station can decide a step size of power control level of itself. The mobile station is used for closed loop power control of reverse link CDMA communication. The closed loop power control uses transmission power control bits. Each transmission power control bit is transmitted from the base station toward the mobile station to designate either an increase or a decrease of the transmission power of the mobile station. When being supplied from the base station with a reception signal subjected to power fluctuation, the mobile station uses the step size to transmit toward a base station an output signal that is subjected to power control.

The mobile station according to one aspect of this invention comprises a receiver, a step size decider, a transmission power, and a transmitter. When receiving the reception signal, the receiver extracts the transmission power control bits from the reception signal. The step size decider decides a proper step size of power control level in correspondence with the power fluctuation of the reception signal. The transmission power controller receives the transmission power control bit and the proper step size and produces a power control signal in accordance with an indication of the transmission power control bit and the proper step size. The power control signal is input into the transmitter. The transmitter transmits the output signal with transmission power control corresponding to the power control signal.

With such structure, the mobile station can control a transmission power level with a step size decided in itself, and therefore, the base station does not need to decide the step size for the mobile station.

### Brief Description of the Drawings:

Fig. 1 is a block diagram schematically showing a mobile staion according to an embodiment of this invention;
Fig. 2 shows an example of a receiver illustrated in Fig. 1;
Fig. 3 shows an example of a transmitter illustrated in Fig. 1;
Fig. 4 shows an example of a step size decider illustrated in Fig 1;
Fig. 5 is a graph showing operations of a minimum detector and a power avcragcr illustrated in Fig. 4;
Fig. 6 is a circuit diagram showing an example of a minimum detector illustrated in Fig. 4;
Fig. 7 is a graph showing an operation of a fading pitch measurer illustrated in Fig. 4;
Fig. 8 is a flowchart showing an operation of the fading pitch measurer illustrated in Fig. 4;
Fig. 9 is a flowchart showing an operation of a step size producer illustrated in Fig. 4;
Fig. 10 is a table which is used to select a proper step size in the step size producer illustrated in Fig. 4; and
Fig. 11 shows another example of a step size decider illustrated in Fig. 1.

### Description of the Preferred Embodiments :

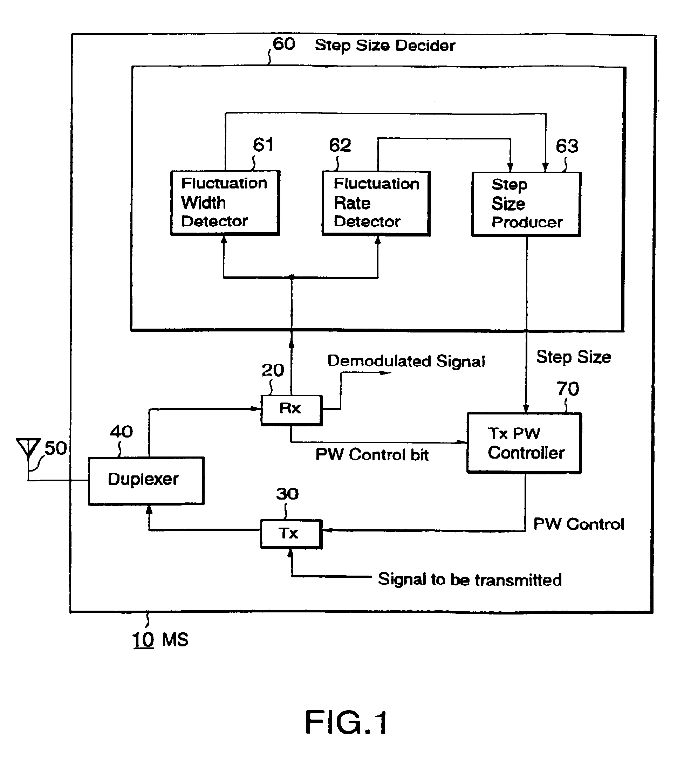

A mobile station according to an embodiment of the present invention is schematically shown in Fig. 1 and can be used for closed loop power control of reverse link CDMA communication. The closed loop power control uses transmission power control bits. Each transmission power control bit is transmitted from a base station toward the mobile station to designate either an increase or a decrease of the transmission power of the mobile station. The mobile station receives a signal as a reception signal from the base station. The reception signal is subjected to power fluctuation. The mobile station can transmit toward a base station an output signal with power control in accordance with the power fluctuation of the reception signal.

The illustrated mobile station 10 comprises a receiver 20, a transmitter 30, a duplexer 40, an antenna 50, a step size decider 60, and a transmission power controller 70. The illustrated receiver 20 receives the reception signal from the base station through the antenna 50 and the duplexer 40, which comprises for example a circulator, and demodulates the reception signal into a demodulated signal. Also, the receiver 20 can extract the transmission power control bits from the reception signal. The step size decider is coupled to the receiver 20 and can decide a proper step size of power control level in correspondence with the power fluctuation of the reception signal. The proper step size is delivered into the transmission power controller 70 in Fig. 1. The transmission power controller 70 can produce a power control signal in accordance with an indication of the transmission power control bit and the proper step size decided at the step size decider 60. The illustrated transmitter 30 transmits toward the base station through the duplexer 40 and the antenna 50 the output signal with transmission power control, corresponding to the power control signal.

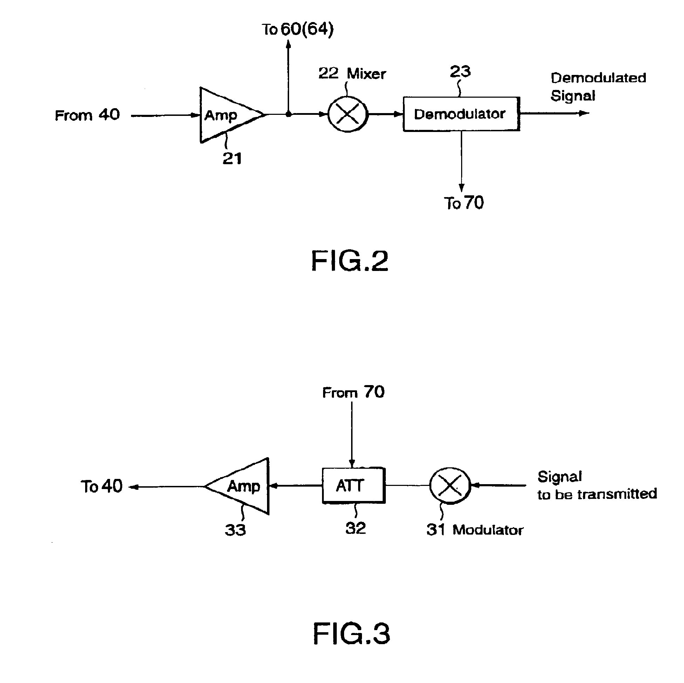

The receiver 20 may comprise an amplifier 21, a mixer 22 and a demodulator 23, as shown in Fig. 2. In this embodiment, when the reception signal is input into the receiver 20, the amplifier 21 amplifies the reception signal to produce an amplified signal. The amplified signal is delivered into the step size decider 60 and the mixer 22. The illustrated mixer 22 carries out frequency conversion for the amplified signal to output an intermediate frequency signal. The illustrated demodulator 23 demodulates the intermediate frequency signal into the demodulated signal and also extracts the transmission power control bit from the reception signal as the local frequency signal.

The transmitter 30 may comprise a modulator 31, an attenuator 32 and an amplifier 33, as shown in Fig. 3. In this embodiment, a signal to be transmitted is subjected to modulation at the modulator 31 and then is input as a modulated signal into the attenuator 32. The illustrated attenuator 32 varies power level of the modulated signal, corresponding to the power control signal input from the transmission power controller 70, to produce a level varied signal. The level varied signal is amplified by the amplifier 33 and then is transmitted, as a transmission signal with power control, through the duplexer 40 and the antenna 50 toward the base station.

The step size decider 60 illustrated in Fig. 1 comprises a fluctuation width detector 61, a fluctuation rate detector 62, and a step size producer 63. The fluctuation width detector 61 monitors the reception signal and detects the fluctuation width in the reception signal. As the result of the detection, the fluctuation width detector 61 produces a fluctuation width signal which is delivered into the step size producer 63. The fluctuation rate detector 62 monitors the reception signal over a predetermined interval and detects the fluctuation rate in the reception signal. As the result of the detection, the fluctuation rate detector 62 produces a fluctuation rate signal which is also input into the step size producer 63. The step size producer 63 produce the proper step size in response to the fluctuation width signal and the fluctuation rate signal. The step size decider 60 may comprise any one of the fluctuation width detector 61 and the fluctuation rate detector 62. The step size producer 63 produces the proper step size in response to the fluctuation width signal if the step size decider 60 does not comprise the fluctuation rate detector 62, while produces the proper step size in response to the fluctuation rate signal if the step size decider 60 does not comprise the fluctuation width detector 61. That is, power fluctuation may be defined by either the fluctuation width or the fluctuation rate in the step size decider 60.

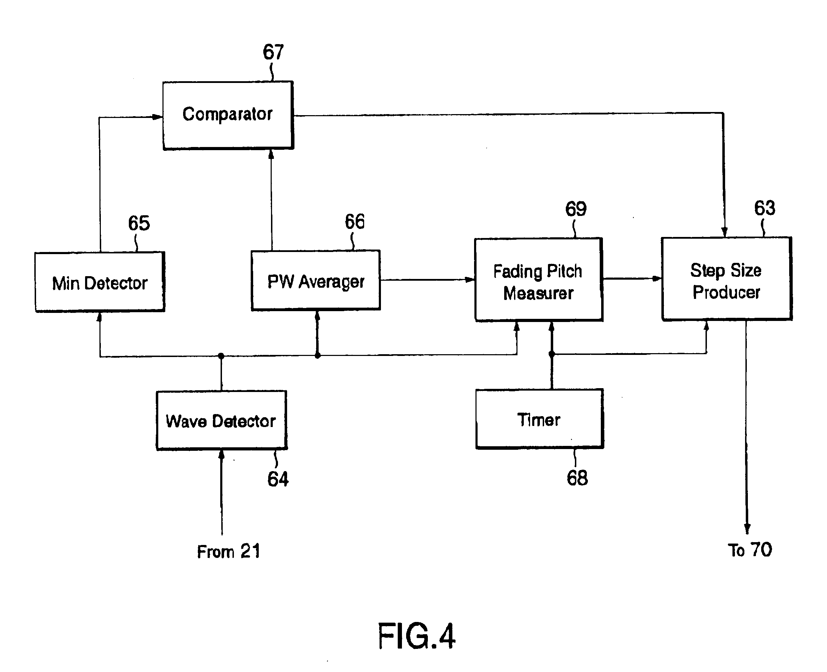

For example, the step size decider 60 illustrated in Fig. 1 comprises a wave detector 64, a minimum detector 65, a power averager 66, a comparator 67, a timer 68, a fading pitch measurer 69 and the step size producer 63, as shown in Fig. 4. The wave detector 64, the minimum detector 65, the power averager 66 and the comparator 67 comprise the fluctuation width detector 61 illustrated in Fig. 1. The wave detector 64, the power averager 66, the timer 68 and the fading pitch measurer 69 comprise the fluctuation rate detector 62 illustrated in Fig. 1. That is, the fluctuation width detector 61 and the fluctuation rate detector 62 shares with each other the wave detector 64 and the power averager 66, in this example. The fluctuation width detector 61 and the fluctuation rate detector 62 may comprise wave detectors and power averagers, respectively.

The illustrated wave detector carries out the wave detection in response to the reception signal, which is the amplified signal in this embodiment, and produces a wave detected signal. The wave detected signal is delivered into the minimum detector 65, the power averager 66 and the fading pitch measurer 69.

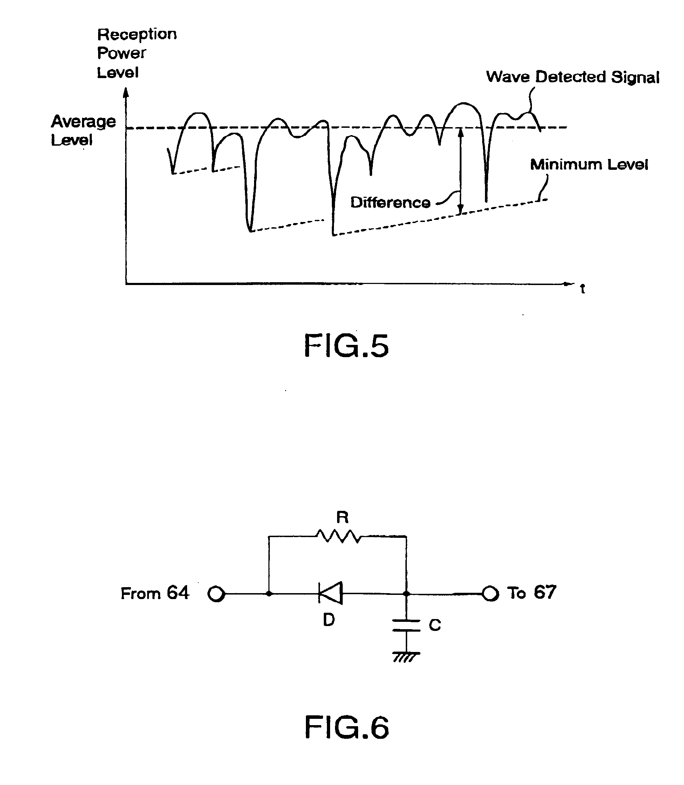

The illustrated minimum detector 65 detects a minimum level of the wave detected signal, as shown in Fig. 5. For example, the minimum detector 65 comprises a resistor, a diode and a capacitor, as shown in Fig. 6. In detail, the anode of the diode is coupled to the wave detector 64, while the cathode of the diode is coupled to the comparator 67. Two ends of the resistor are connected to the anode and the cathode of the diode, respectively. One end of the capacitor is connected to the cathode of the diode, while another end of the capacitor is grounded.

The illustrated power averager 66 averages power of the wave detected signal to obtain an average level, as also shown in Fig. 5. The power averager 66 may comprise a low-pass filter.

The illustrated comparator 67 compares the minimum level and the average level of the wave detected signal to produce, as the fluctuation width signal, a signal indicative of difference between the minimum level and the average level. The difference is also depicted in Fig. 5.

The illustrated timer 68 produces a trigger signal at every predetermined interval.

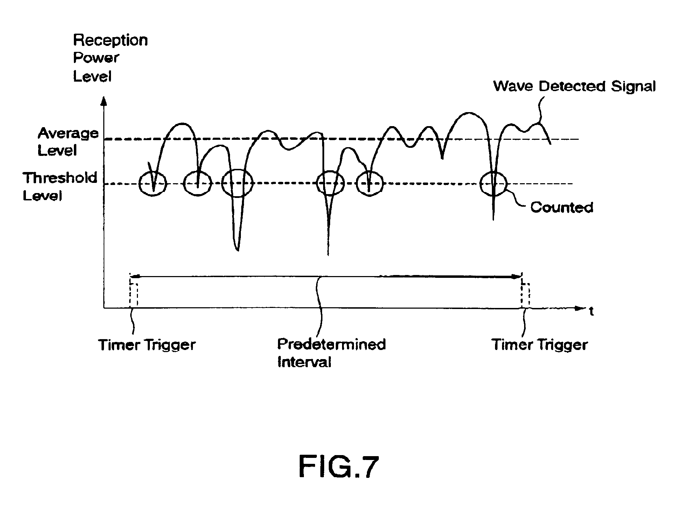

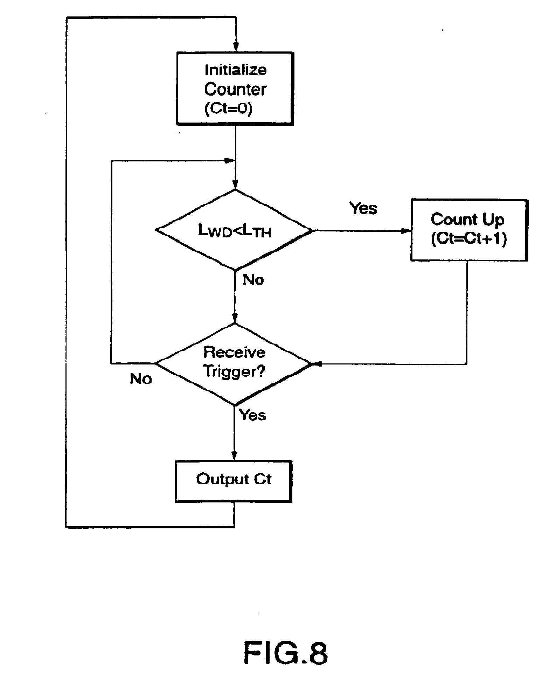

The illustrated fading pitch measurer 69 monitors the wave detected signal and measures a fading pitch as the fluctuation rate with reference to the average level. Then the fading pitch measurer 69 produces the fluctuation rate signal. For example, the fading pitch measurer 69 comprises a counter (not shown). The counter counts over the predetermined interval the number of times when the wave detected signal is lower in level than a threshold level. The threshold level is lower by a predetermined level than the average level, as shown in Fig. 7. In detail, the fading pitch measurer 69 functions as shown in Fig. 8. The fading pitch measurer 69 at first initializes the counter, namely Ct = 0. When the level of the wave detected signal become smaller than the threshold level, the fading pitch measurer increase the count value of the counter one, and then judges whether or not the trigger signal is input from the timer 68. On the other hand, When the level of the wave detected signal is not smaller than the threshold level, the fading pitch measurer directly carries out the judgement whether or not the trigger signal is input from the timer 68. Thus the count-up is carried out until the next trigger signal is input into the fading pitch measurer 69. When receiving the trigger signal from the timer 68, the fading pitch measurer 69 outputs the count value of the counter into the step size producer 63.

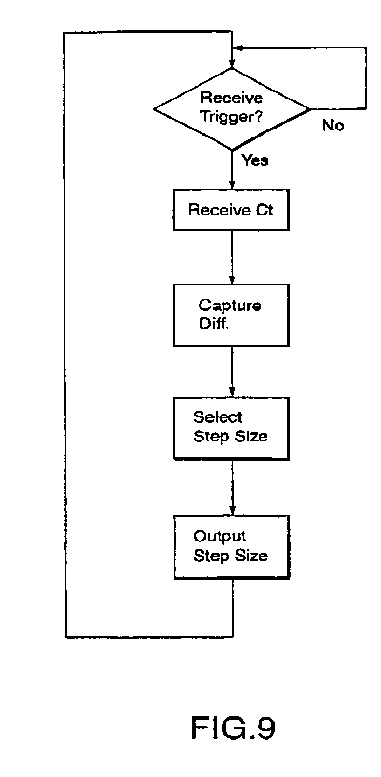

The step size producer 63 that can correspond to the example of the fading pitch measurer 69 has a plurality of predetermined step sizes and functions as shown in Fig. 9. When input the trigger signal from the timer 68, the step size producer receives the count value from the counter of the fading pitch measurer 69. Herein, the step size producer 63 may get the count value out of the counter if the counter is of type where the counter holds its count value and does not output its count value voluntarily. Then the step size producer 63 captures the difference from the comparator 67. The step size producer 63 selects a proper one among the predetermined step sizes, in accordance with the fluctuation rate as the count value and the fluctuation width as the difference between the average level and the minimum level of the wave detected signal. The selected step size is output into the transmission power controller 70. The selection is repeatedly executed for each predetermined interval between two trigger signals.

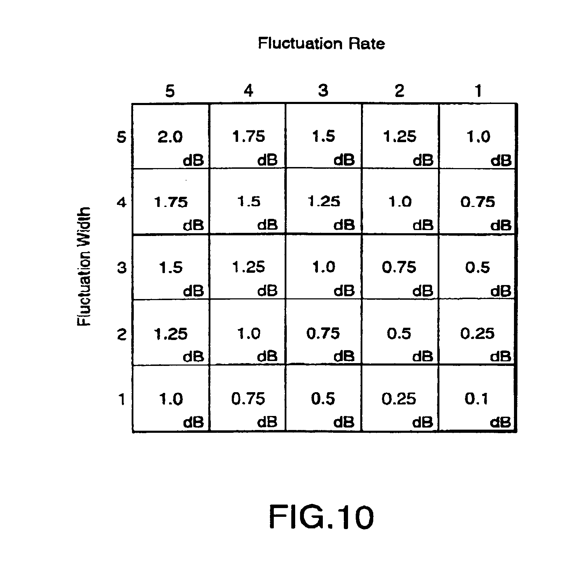

For example, the step size producer 63 has an evaluation table shown in Fig. 10 and can evaluate the fluctuation rate and the fluctuation width by using first grade through fifth grade, respectively. In this case, the step size producer 63 decides the grades of the fluctuation rate and the fluctuation width, respectively, when receiving the count value and the difference. After the decision, the step size producer 63 selects, as the proper step size, a step size that corresponds to a crossing of the both grades. The proper step size become 1.25 dB if the fluctuation rate is fourth grade and the fluctuation width is third grade.

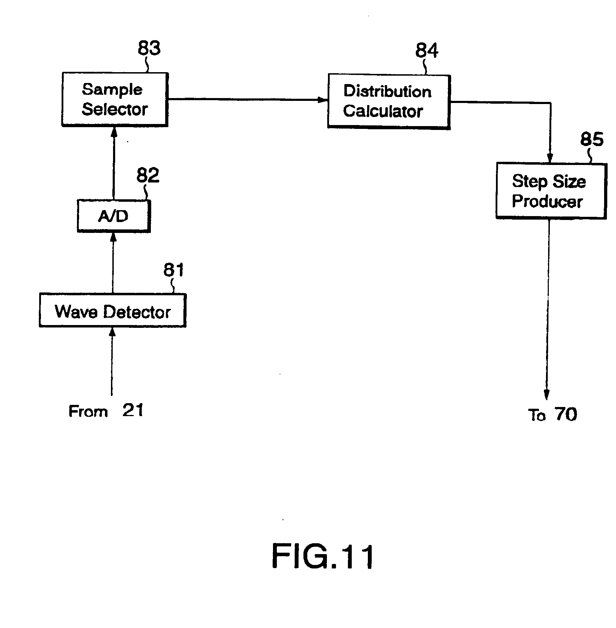

Referring to Fig. 11, a step size decider according to another embodiment of this invention comprises a wave detector 81, an A/D converter 82, a sample selector 83, a distribution calculator 84 and a step size producer 85. The wave detector 81 carries out the wave detection, as the same manner of the wave detector illustrated in Fig. 4, and produces a wave detected signal. The A/D converter 82 carries out an A/D conversion for the wave detected signal to produce a digital signal having digital data. The sample selector 83 periodically selects or picks up sample data from the digital data of the digital signal to produce sample data signals. The distribution calculator 84 statistically calculates a distribution condition of the sample data in response to the sample data signals. The distribution condition corresponds to both the fluctuation width and the fluctuation rate. In detail, if the hard fading occurs, the value of the distribution condition is large. If not, the value of the distribution condition is small. The step size producer 85 produces the proper step size responsive to the distribution condition. The step size producer 85 may be equal to the step size producer 63 illustrated in Fig. 4.

While the invention has been particularly shown and described with respect to preferred embodiments thereof, it will be understood by those skilled in the art that changes in form and details may be made therein without departing from the scope and spirit of the invention. For example, although the number of the grades of the fluctuation width and the fluctuation rate in the evaluation table shown in Fig. 10 is five, respectively, the number of the grades is not restricted to the above-mentioned example and Fig. 10. The number of the grades may be smaller or greater than five, and additionally, the number of the grades of the fluctuation width may be different from that of the fluctuation rate.

## Claims

1. A mobile station (10) for use in closed loop power control of reverse link CDMA communication and for transmitting toward a base station an output signal subjected to power control, said closed loop power control using transmission power control bits each of which is transmitted from the base station toward said mobile station to designate either an increase or a decrease of the transmission power of said mobile station, said mobile station being supplied from the base station with a reception signal subjected to power fluctuation, said mobile station comprising receiving means (20) for receiving the reception signal to extract the transmission power control bits from the reception signal, transmission power control means (70) for producing a power control signal in accordance with an indication of the transmission power control bit, and transmitting means (30) for transmitting the output signal with transmission power control corresponding to the power control signal, characterized in that said mobile station further comprises a step size deciding means (60) for deciding a proper step size of power control level in correspondence with the power fluctuation of the reception signal so that said transmission power control means produces said power control signal in accordance with said proper step size in addition to said indication of the transmission power control bit.

2. A mobile station as claimed in claim 1, characterized in that said step size deciding means has a plurality of predetermined step sizes of the power level control and selects, as said proper step size, one of the predetermined step sizes in correspondence with the power fluctuation of the reception signal.

3. A mobile station as claimed in claim 1, characterized in that said power fluctuation is defined by a selected one of a fluctuation width and a fluctuation rate.

4. A mobile station as claimed in claim 3, characterized in that said step size deciding means comprises:
fluctuation width detecting means (61) for detecting the fluctuation width in the reception signal, by monitoring the reception signal, to produce a fluctuation width signal; and
step size producing means (63) for producing said proper step size in response to the fluctuation width signal.

5. A mobile station as claimed in claim 4, characterized in that said fluctuation width detecting means comprises:
wave-detecting means (64) for carrying out the wave detection in response to the reception signal, to produce a wave detected signal;
power average means (66) for averaging power of the wave detected signal to obtain an average level;
minimum detecting means (65) for detecting a minimum level of the wave detected signal; and
comparing means (67) for comparing the minimum level and the average level of the wave detected signal to produce, as the fluctuation width signal, a signal indicative of difference between the minimum level and the average level.

6. A mobile station as claimed in claim 5, characterized in that said step size deciding means further comprises:
timer means (68) for producing a trigger signal at every predetermined interval; and
fading pitch measuring means for measuring a fading pitch as the fluctuation rate, by monitoring the wave detected signal with reference to the average level, to produce a fluctuation rate signal, so that the step size producing means produces the proper step size, according to the fluctuation rate signal in addition to the fluctuation width signal.

7. A mobile station as claimed in claim 6, characterized in that said fading pitch measuring means counts over the predetermined interval the number of times when the wave detected signal is lower in level than a threshold level that is lower by a predetermined level than the average level.

8. A mobile station as claimed in claim 3, characterized in that said step size decider comprises:
fluctuation rate detecting means (62) for detecting the fluctuation rate in the reception signal, by monitoring the reception signal over a predetermined interval, to produce a fluctuation rate signal; and
step size producing means (63) for producing the proper step size in response to the fluctuation rate signal.

9. A mobile station as claimed in claim 8, characterized in that said fluctuation rate detecting means comprises:
wave-detecting means (64) for carrying out the wave detection in response to the reception signal, to produce a wave detected signal;
power averaging means (66) for averaging power of the wave detected signal to obtain an average level; and
timer means (68) for producing a trigger signal every predetermined interval; and
fading pitch measuring means (69 for measuring a fading pitch, by counting, initialize over the predetermined interval between the trigger signals, the number of times when the wave detected signal is lower in level than a threshold level that is lower by a predetermined level than the average level, to produce the fluctuation rate signal indicative of the fading pitch.

10. A mobile station as claimed in claim 1, characterized in that said step size deciding means comprises:
wave detecting means (81) for canying out the wave detection in response to the reception signal, to produce a wave detected signal;
A/D conversion means (82) for carrying out an A/D conversion for the wave detected signal to produce a digital signal having digital data;
sample selection means (83) for periodically selecting sample data from the digital data of the digital signal to produce sample data signals;
distribution calculation means (84) for statistically calculating a distribution condition of the sample data in response to the sample data signals; and
step size producing means (85) for producing the proper step size responsive to the distribution condition.
